# EUROPÄISCHE PATENTANMELDUNG

(11) **EP 1 538 022 A2**
(43) Veröffentlichungstag der Anmeldung: **08.06.2005**
(21) Anmeldenummer: 04028563.7
(22) Anmeldetag: 02.12.2004
(51) Int. Cl.: B60Q 1/04

(54) **Leuchteinheit für Fahrzeuge**

(30) Priorität: 03.12.2003 DE 10356986
(71) Anmelder: Hella-Behr Fahrzeugsysteme GmbH, 59552 Lippstadt (DE)
(72) Erfinder: Opperbeck, Guido, Dipl.-Ing., 59557 Lippstadt (DE); Braun, Dieter, Dipl.-Ing., 33378 Rheda-Wiedenbrück (DE)
(74) Vertreter: Ostermann, Thomas, Dipl.-Ing.

(57) **Zusammenfassung**

Die Erfindung betrifft eine Leuchteinheit (1) für Fahrzeuge mit einem Leuchtengehäuse, in dem lichttechnische Komponenten angeordnet sind, und mit einer die Lichtaustrittsöffnung des Leuchtengehäuses abschließenden Abdeckscheibe (2), wobei die Abdeckscheibe (2) mit einem benachbarten Anschlussteil (3) der Karosserie in einem Randbereich (4) direkt verbunden ist, wobei ein Randsteg (6) der Abdeckscheibe (2) oder des Anschlussteils (3) in eine korrespondierende Aufnahme (5) des Anschlussteils (3) bzw. der Abdeckscheibe (2) eingreift, und dass in der verbleibenden Fuge zwischen dem Randsteg (6) und einer dem Randsteg (6) zugewandten benachbarten Wandung (7,11) der Aufnahme (5) ein Einsatzelementes (12,20) derart angeordnet ist, dass der Randsteg (6) zum einen in der Aufnahme (5) gelagert ist und zum anderen die Fuge nach außen hin dichtend abgedeckt ist.

## Beschreibung

Die Erfindung betrifft eine Leuchteinheit für Fahrzeuge mit einem Leuchtengehäuse, in dem lichttechnische Komponenten angeordnet sind, und mit einer die Lichtaustrittsöffnung des Leuchtengehäuses abschließenden Abdeckscheibe.

Aus der DE 196 15 026 A1 ist eine Leuchteinheit für Fahrzeuge mit einem Leuchtengehäuse, das lichttechnische Komponenten wie z.B. einen Reflektor und eine Lichtquelle trägt, und mit einer die Lichtaustrittsöffnung des Leuchtengehäuses abschließenden Abdeckscheibe bekannt. Zur Befestigung der Abdeckscheibe ist ein Rand derselben in einer Nut des Leuchtengehäuses befestigt. Ein der Abdeckscheibe benachbartes Anschlussteil der Karosserie, wie beispielsweise eine Stoßfängerabdeckung oder ein Kotflügel, ist mit dem Leuchtengehäuse über Rastelemente unter Bildung einer Fuge zwischen dem Rand der Abdeckscheibe einerseits und dem Rand des Anschlussteils andererseits lösbar verbunden. Nachteilig an der bekannten Leuchteinheit ist, dass zwischen der Abdeckscheibe und dem Anschlussteil stets eine ausreichend große Fuge vorhanden sein muss, um den konstruktions- und lagebedingten Toleranzen der angrenzenden Bauteile gerecht zu werden.

Aufgabe der vorliegenden Erfindung ist es, eine Leuchteinheit für Fahrzeuge derart weiterzubilden, dass eine Fugenbildung zwischen einer Abdeckscheibe der Leuchteinheit und einem benachbarten Anschlussteil der Karosserie weiter verringert wird.

Zur Lösung dieser Aufgabe ist die Erfindung in Verbindung mit dem Oberbegriff des Patentanspruchs 1 dadurch gekennzeichnet, dass die Abdeckscheibe mit einem benachbarten Anschlussteil der Karosserie in einem Randbereich direkt verbunden ist, wobei ein Randsteg der Abdeckscheibe oder des Anschlussteils in eine korrespondierende Aufnahme des Anschlussteils bzw. der Abdeckscheibe eingreift, und dass in der verbleibenden Fuge zwischen dem Randsteg und einer dem Randsteg zugewandten benachbarten Wandung der Aufnahme ein Einsatzelement derart angeordnet ist, dass der Randsteg zum einen in der Aufnahme gelagert ist und zum anderen die Fuge nach außen hin dichtend abgedeckt ist.

Nach der Erfindung ist es vorgesehen, dass zum einen die Abdeckscheibe randseitig direkt mit einem Anschlussteil der Karosserie verbunden ist. Hierzu ist ein Randsteg der Abdeckscheibe oder des Anschlussteils in einer korrespondierenden Aufnahme des benachbarten Teils bzw. der Abdeckscheibe gelagert. Vorteilhaft kann hierdurch eine Minimierung des Fugenspaltes erzielt werden.

Zum anderen ist nach der Erfindung vorgesehen, dass der restliche Fugenspalt zwischen dem Randsteg und der dem Randsteg zugewandten benachbarten Wandung des anderen Bauteils zumindest teilweise durch ein Einsatzelement ausgefüllt ist. Vorteilhaft kann hierdurch zum einen erreicht werden, dass der Randsteg vibrationsarm in der Aufnahme gelagert ist. Eine unerwünschte Reibung bzw. Kratzen der gegebenenfalls aus Metall bestehenden Randstege einerseits und der Aufnahme andererseits wird hierdurch vermieden. Vorteilhaft kann zum anderen eine Abdichtung des in die Aufnahme eingreifenden Randstegs erzielt werden. Dadurch, dass der Fugenspalt weitgehend durch das Einsatzelement ausgefüllt ist, kann bei Ausbildung der Leuchteinheit als Scheinwerfer in einem vorderen Bereich des Fahrzeugs ein verbesserter cw-Wert erzielt und eine unerwünschte Geräuschentwicklung reduziert werden. Darüber hinaus kann der Übergang zwischen dem Bauteilen der Abdeckscheibe einerseits und des benachbarten Anschlussteils andererseits optisch ansprechend gestaltet sein bzw. homogenisiert werden.

Nach einer bevorzugten Ausführungsform der Erfindung ist das Einsatzelement nachgiebig_ausgebildet, so dass lagebedingte Toleranzen zwischen der Abdeckscheibe und dem Anschlussteil ausgeglichen werden können. Hierdurch kann sichergestellt werden, dass stets der Fugenspalt ausgefüllt werden kann, so dass die Abdeckscheibe und das Anschlussteil quasi fugenlos aneinander liegen.

Nach einer bevorzugten Weiterbildung der Erfindung ist der Zwischenraum (Fugenspalt) zwischen dem Randsteg des einen Bauteils und der dem Randsteg zugewandten Wandung des benachbarten Bauteils vollständig durch das Einsatzelement ausgefüllt, so dass der Randsteg nur über das Einsatzelement an der Aufnahme des benachbarten Bauteils anliegt. Vorteilhaft dient das Einsatzelement zusätzlich zur elastischen Lagerung des Randsteges in der Aufnahme, so dass zum einen Toleranzen ausgeglichen und zum anderen eine sichere Lagerung des Randsteges bzw. des mit dem Randsteg verbundenen Bauteils gegeben ist.

Nach einer Weiterbildung der Erfindung ist die Aufnahme als eine Nut ausgebildet, die randseitig an der Abdeckscheibe angeformt ist. Das benachbarte Anschlussteil weist einen Randsteg auf, der an die Formgebung der Nut angepasst ist. Die Montage wird dadurch erleichtert, dass das Einsatzelement stoffschlüssig mit der Nut verbunden ist. Vorteilhaft braucht bei einem vormontierten Anschlussteil die Leuchteinheit lediglich von hinten unter Umfassen des die Karosserieöffnung begrenzenden Randsteges des Anschlussteiles durch die Nut der Abdeckscheibe nach vorne geschoben werden. Zum anderen kann bei vormontierter Leuchteinheit das benachbarte Anschlussteil an die Abdeckscheibe unter Eingreifen des Randsteges des Anschlussteils in die Nut der Abdeckscheibe angesetzt werden. Vorteilhaft bildet die Nut eine Führung bei der Montage der Abdeckscheibe bzw. des Anschlussteiles. Die eigentliche Befestigung derselben erfolgt in bekannter Weise über gesonderte Befestigungsmittel, vorzugsweise Schraubverbindungen.

Nach einer Weiterbildung der Erfindung kann die Aufnahme bzw. das Einsatzelement sowie der Randsteg bereichsweise oder umlaufend an der Abdeckscheibe angeordnet sein. Dabei stellt die Verbindung zwischen Abdeckscheibe und Anschlussteil in diesem Bereich einen Lager- oder Befestigungsstreifen dar, dem eine ergänzende Lager- bzw. Befestigungsfunktion zukommt. Gegebenenfalls können Befestigungsmittel bei der herkömmlichen Befestigung des Leuchtengehäuses an einem Modulträger oder an der Karosserie eingespart werden. Alternativ kann durch das erfindungsgemäße Vorsehen von einem oder mehreren Lager- bzw. Befestigungsstreifen eine zusätzliche Befestigungsmöglichkeit des Leuchtengehäuses geschaffen werden, die insbesondere eine dämpfende Lagerung desselben in einem vorderen Bereich ermöglicht.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine perspektivische Vorderansicht einer Abdeckscheibe mit einer bereichsweise umlaufend angeordneten Aufnahme für einen Randsteg eines benachbarten Anschlussteils einer Karosserie,
- Figur 2: einen Vertikalschnitt durch einen oberen Randbereich einer Leuchteinheit, in dem die Abdeckscheibe gemäß Figur 1 mit einem sich nach oben anschließenden Anschlussteil verbunden ist und
- Figur 3: einen Vertikalschnitt durch eine Leuchteinheit nach einer weiteren Ausführungsform in einem oberen Verbindungsbereich zwischen der Abdeckscheibe und dem Anschlussteil gemäß Figur 1.

Eine Leuchteinheit 1 für Fahrzeuge, die vorzugsweise als ein Scheinwerfer ausgebildet ist, weist ein nicht dargestelltes Leuchtengehäuse auf, in dem lichttechnische Komponenten, wie z. B. eine Lichtquelle und ein Reflektor, angeordnet sind. Eine Lichtaustrittsöffnung des Leuchtengehäuses ist durch eine glasklare Abdeckscheibe 2 abgeschlossen.

Zur Verbindung der Abdeckscheibe 2 mit dem Leuchtengehäuse ist ein freies Ende eines Randes der Abdeckscheibe 2 entlang eines Teilumfanges desselben in einer Nut des Leuchtengehäuses in herkömmlicher Weise befestigt. Dabei kann der Rand über eine elastische Dichtung in der Nut des Leuchtengehäuses gelagert sein, so dass eine Kompensation von Bauteil- bzw. Fügetoleranzen gewährleistet ist.

Nach der Erfindung erfolgt die Verbindung zwischen der Abdeckscheibe 2 und einem benachbart angeordneten Anschlussteil 3 der Karosserie des Fahrzeugs direkt über eine Steg-Nut-Verbindung.

Die Abdeckscheibe 2 weist in einem Randbereich 4 derselben eine Aufnahme 5 für einen Randsteg 6 des Anschlussteils 3 auf. In den vorliegenden Ausführungsbeispielen ist die Aufnahme 5 der Abdeckscheibe 2 als eine Nut ausgebildet, die über eine gerade erste Nutwandung 7 verfügt. Die erste Nutwandung 7 ist Bestandteil eines Randelementes 8 der Abdeckscheibe 2, das sich unter einem Winkel 9 von einer die Lichtaustrittsöffnung des Leuchtengehäuses abdeckenden Scheibenfläche 10 erstreckt. Das freie Ende des Randelementes ist - wie bereits oben erläutert - in einer Nut des Leuchtengehäuses gelagert.

Ferner verfügt die Nut 5 über eine henkelförmige zweite Nutwandung 11, die von der ersten Nutwandung 7 U-förmig abragt. Die Öffnung der Nut 5 ist in Lichtaustrittsrichtung oder zur Fahrzeugaußenhaut hin gerichtet ausgebildet.

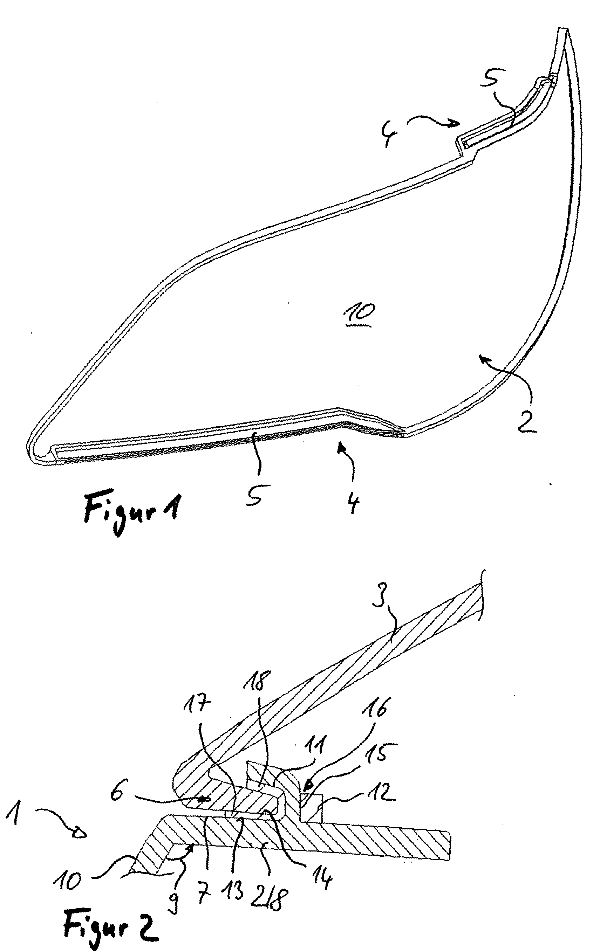

Nach einer ersten Ausführungsform einer Leuchteinheit 1 gemäß Figuren 1 und 2 ist der Randsteg 6 des Anschlussteils 3 über ein Einsatzelement 12 in der Nut 5 gelagert. Das Einsatzelement 12 besteht aus einem dichtenden und nachgiebigen Material und erstreckt sich in einem solchen Bereich der Nut 5, dass die Flächen des Randsteges 6 nicht unmittelbar an der ersten Nutwandung 7 und/oder der zweiten Nutwandung 11 anliegen. Das Einsatzelement 12 ist - wie die zweite Nutwandung 11 - im Querschnitt U-förmig ausgebildet, wobei es mit einer Außenseite 13 der Form der ersten Nutwandung 7 und der zweiten Nutwandung 11 und mit einer Innenseite 14 der Formgebung des Randsteges 6 angepasst ist.

Das Einsatzelement 12 ist vorzugsweise stoffschlüssig durch Klebung oder Anspritzen an der Nut 5 gehalten. Dabei haftet das Einsatzelement 12 nicht nur auf einer dem Randsteg 6 zugewandten Seite der Nut 5, sondern auch auf einer dem Randsteg 6 abgewandten Seite 15 der Nut. Somit ist ein Scheitelbereich 16 der Nut 5, der im Wesentlichen durch die zweite Nutwandung 11 gebildet wird, vollständig von dem Einsatzelement 12 umfasst.

Das Einsatzelement 12 weist auf einer dem Randsteg 6 zugewandten Seite einen langen Schenkel 17 auf, der unmittelbar an der ersten Nutwandung 7 anliegt, und einen kurzen Schenkel 18 auf, der an der zweiten Nutwandung 11 anliegt. Der kurze Schenkel 18 schließt bündig mit der zweiten Nutwandung 11 ab. Der lange Schenkel 17 erstreckt sich im Wesentlichen geradlinig von dem Scheitelbereich 16 nach außen in einem Abstand zu der Fahrzeugaußenhaut. Die Länge des langen Schenkels 17 des Einsatzelementes 12 ist ca. halb so lang wie die erste Nutwandung 7. Hierdurch ist eine ausreichend abdichtende Lagerung des Randsteges 6 in der Nut 5 gewährleistet.

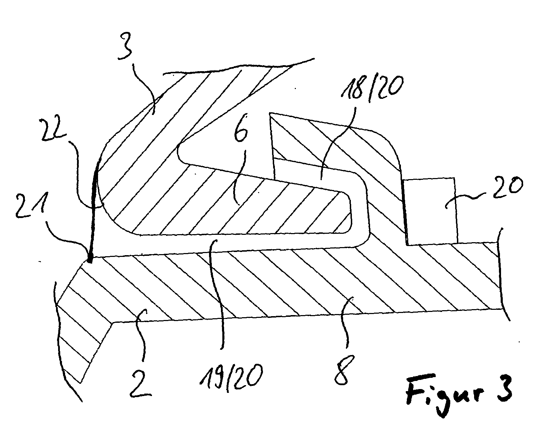

Nach einer alternativen Ausführungsform gemäß Figur 3 kann im Unterschied zu der ersten Ausführungsform ein langer Schenkel 19 eines Einsatzelementes 20 vorgesehen sein, dessen freies Ende in die Nähe der Fahrzeugaußenhaut reicht. Dabei kann die Länge so gewählt sein, dass der lange Schenkel 19 bündig mit einer vorderen Kante 21 der Abdeckscheibe 2 einerseits und einer vorderen Kante 22 des Anschlussteils 3 andererseits abschließt. Gemäß dieser Ausführungsform ist die zwischen dem Randsteg 6 und der ersten Nutwandung 7 gebildeten Fuge vollständig durch das Einsatzelement 20 ausgefüllt.

Das Einsatzelement 12, 20 ist einstückig ausgebildet und umgreift den Scheitelbereich 16 der Nut 5 vollständig. Hierdurch wird eine innige und langzeitstabile Verbindung zwischen dem Einsatzelement 12, 20 und der Nut 5 erzielt.

Das Einsatzelement 12, 20 ist vorzugsweise aus einem nachgiebigen Kunststoffmaterial oder Gummimaterial gebildet. Hierdurch können Toleranzabweichungen zwischen der Abdeckscheibe 2 und dem Anschlussteil 3 ausgeglichen werden.

Zur Montage kann bei einem vormontierten Anschlussteil 3 die Leuchteinheit 1 von innen in die vorgegebene Position verschoben werden, wobei die Nut 5 mit dem Einsatzelement 12, 20 den Randsteg 6 des Anschlussteils 3 umgreift.

Bei einer vormontierten Leuchteinheit 1 kann auf einfache Weise das Anschlussteil 3 von außen in die vorgegebene Position verbracht werden, wobei der Randsteg 6 des Anschlussteils 3 in die Öffnung der Nut 5 eingreift.

## Patentansprüche

1. Leuchteinheit für Fahrzeuge mit einem Leuchtengehäuse, in dem lichttechnische Komponenten angeordnet sind, und mit einer die Lichtaustrittsöffnung des Leuchtengehäuses abschließenden Abdeckscheibe, **dadurch gekennzeichnet, dass** die Abdeckscheibe mit einem benachbarten Anschlussteil (3) der Karosserie in einem Randbereich direkt verbunden ist, wobei ein Randsteg (6) der Abdeckscheibe (2) oder des Anschlussteils (3) in eine korrespondierende Aufnahme (5) des Anschlussteils (3) bzw. der Abdeckscheibe (2) eingreift, und dass in der verbleibenden Fuge zwischen dem Randsteg (6) und einer dem Randsteg (6) zugewandten benachbarten Wandung (7, 11) der Aufnahme (5) ein Einsatzelement (12) derart angeordnet ist, dass der Randsteg (6) zum einen in der Aufnahme (5) gelagert ist und zum anderen die Fuge nach außen hin dichtend abgedeckt ist.

2. Leuchteinheit nach Anspruch 1, **dadurch gekennzeichnet, dass** das Einsatzelement (12) nachgiebig ausgebildet ist und sich unter Anlage an dem Randsteg (6) und einer dem Randsteg (6) zugewandten Wandung (7, 11) der Aufnahme (5) von einem Fußpunkt (16) der Aufnahme (5) in Richtung der Wandung (7, 11) nach außen erstreckt.

3. Leuchteinheit nach Anspruch 1 oder 2, **dadurch gekennzeichnet, dass** das Einsatzelement (12) derart ausgebildet ist, der Zwischenraum zwischen dem Randsteg (6) und der dem Randsteg (6) zugewandten Wandung (7, 11) der Aufnahme (5) vollständig durch das Einsatzelement (12) ausgefüllt ist.

4. Leuchteinheit nach einem der Ansprüche 1 bis 3, **dadurch gekennzeichnet, dass** die Aufnahme (5) eine Nut aufweist, die randseitig an der Abdeckscheibe (2) unter Bildung einer zur Fahrzeugaußenhaut gerichteten Öffnung angeformt ist, mit einer ersten Nutwandung (7), die vorderseitig mit einer Scheibenfläche (10) der Abdeckscheibe (2) verbunden ist, und mit einer zweiten Nutwandung (11), die von der ersten Nutwandung (7) U-förmig abragt.

5. Leuchteinheit nach einem der Ansprüche 1 bis 4, **dadurch gekennzeichnet, dass** das Einsatzelement (12) stoffschlüssig mit der ersten Nutwandung (7) und/oder der zweiten Nutwandung (11) und/oder einer auf einer dem Randsteg (6) abgewandten Seite der Nut (5) angeordnete Wandung (15) der Abdeckscheibe (2) verbunden ist.

6. Leuchteinheit nach einem der Ansprüche 1 bis 5, **dadurch gekennzeichnet, dass** das Einsatzelement (12) in zumindest einem vorderen Fugenbereich unter bündigem Abschluss der Abdeckscheibe (2) und des Anschlussteils (3) angeordnet ist.

7. Leuchteinheit nach einem der Ansprüche 1 bis 6, **dadurch gekennzeichnet, dass** das Einsatzelement (12) aus einem elastischen Kunststoffmaterial oder aus einem Gummimaterial hergestellt ist.

8. Leuchteinheit nach einem der Ansprüche 1 bis 7, **dadurch gekennzeichnet, dass** sich das Einsatzelement (12) und die Nut (5) der Abdeckscheibe (2) über die gesamte gemeinsame Randlänge der Abdeckscheibe (2) und des Anschlussteils (3) erstrecken.

9. Leuchteinheit nach einem der Ansprüche 1 bis 8, **dadurch gekennzeichnet, dass** das Anschlussteil (3) als eine Seitenwand ausgebildet ist, in die die Abdeckscheibe (2) vollständig eingefasst ist und wobei die Nut (5) und das Einsatzelement (12) umlaufend ausgebildet sind.

10. Leuchteinheit nach einem der Ansprüche 1 bis 8, **dadurch gekennzeichnet, dass** das Anschlussteil (3) als ein Frontendmodul und/oder als ein Kotflügel ausgebildet ist, wobei die Nut (5) und das Einsatzelement (12) umlaufend oder teilweise umlaufend ausgebildet sind.
